# FASCICULE DE BREVET EUROPEEN

(11) **EP 0 424 266 B1**
(45) Date de publication et mention de la délivrance du brevet: **16.02.1994**
(21) Numéro de dépôt: 90402936.0
(22) Date de dépôt: 18.10.1990
(51) Int. Cl.: F16H 21/04, F16H 21/10, B62D 57/02

(54) **Dispositif de déplacement relatif à barres articulées et véhicule équipé de tels dispositifs**
Vorrichtung zum relativen Fortbewegen mit angelenkten Stäben und ein damit ausgestattetes Fahrzeug
Moving device with straight-line linkages and walking vehicle with such devices

(30) Priorité: 20.10.1989 FR 8913775
(43) Date de publication de la demande: 24.04.1991
(73) Titulaire: COMMISSARIAT A L'ENERGIE ATOMIQUE, 75015 Paris (FR)
(72) Inventeur: Garrec, Philippe, F-91370 Verrieres le Buisson (FR)
(74) Mandataire: Mongrédien, André

(56) Documents cités:
- FR-A- 659 809
- FR-A- 816 702
- FR-E- 38 865
- US-A- 4 511 011
- MACHINE DESIGN. vol. 22, janvier 1950, CLEVELAND US pages 90 - 92; H.G.Conway: "Straight line linkages"
- ROBOTICS AGE. no. 5, octobre 1983, PETERSBOROUGH, NEW H pages 12 - 18; "ODEX 1: THE FIRST FUNCTIONOID"
- JOURNAL OF ENGINEERING FOR INDUSTRY vol. 97, no. 3, août 1975, New-York,US pages 801 - 806; E.A.DIJKSMAN: "KEMPE'S LINKAGES AND THEIR DERIVATIONS"

## Description

L'invention concerne un dispositif de déplacement relatif qui comprend en particulier des transmissions à barres articulées ainsi qu'un véhicule équipé de tels dispositifs entre un corps central et des appendices d'appui au sol.

On s'intéresse ici en particulier à ces véhicules généralement robotisés dont le corps central est surélevé et dont l'appui au sol se fait par des pattes verticales. Lors de la locomotion, les pattes sont alternativement soulevées et abaissées de façon que le véhicule reste constamment en appui sur certaines pattes. L'avance s'effectue en déformant les transmissions des pattes de façon à déplacer le corps central et les pattes soulevées par rapport aux pattes reliées à ces transmissions se déformant. Contrairement à la plupart des véhicules, les pattes au contact du sol ne se déplacent pas sur celui-ci en roulant ou en glissant.

Les transmissions ont une constitution géométrique qui permet la conversion d'un mouvement circulaire produit par un moteur en un mouvement rectiligne horizontal de la patte, le soulèvement et l'abaissement périodiques des pattes étant effectués par d'autres moyens.

Il existe diverses transmissions pour convertir un mouvement circulaire en un mouvement alternatif ou vice-versa. Beaucoup ont des inconvénients, notamment en ce qui concerne leur rendement mécanique. Celles qui ont été retenues pour faire partie de l'invention utilisent exclusivement des barres articulées entre elles. Il faut remarquer que plusieurs des transmissions intégrées dans l'invention et présentant comme propriété de présenter un degré de liberté, la trajectoire d'un des points étant un cercle et la trajectoire d'un autre point étant une droite, sont déjà connus.

La transmission comprend, en termes généraux, un système principal de barres articulées entre elles et comprenant un premier point articulé au solide, un deuxième point articulé à l'organe, une manivelle faisant partie des barres et articulée au solide en un troisième point et à d'autres barres en un quatrième point, cette manivelle ayant une longueur égale à la distance entre le premier et le troisième points de sorte qu'un mouvement de rotation de la manivelle autour du troisième point se traduit par un mouvement rectiligne du deuxième point.

Le système principal est complété par un système additionnel de barres articulées au solide en un cinquième point et à l'organe en un sixième point ; le système additionnel est constitué de manière à présenter une chaîne de barres entre le sixième et le cinquième points identique, à une translation près, à une chaîne de barres du système principal entre le deuxième point et un septième point où le système principal est articulé au solide ; ce septième point sera généralement confondu avec soit le premier soit le troisième point. Enfin, des barres de liaison sont disposées entre les deux systèmes de manière que l'ensemble des deux systèmes ait un degré de liberté et que les deux chaînes de barres se déforment identiquement. La transmission est complétée par un système moteur apte à faire tourner la manivelle. Conformément à l'invention, le système moteur comprend un arbre moteur perpendiculaire au plan du système des barres, ledit arbre tournant autour du troisième point et la manivelle étant fixée audit arbre. La transmission peut ainsi être mue avec une faible énergie, et les efforts originaires du deuxième point et perpendiculaires à son déplacements, tels que les réactions d'appui de l'organe au sol, ne provoquent aucun couple sur le moteur, qui peut ainsi être de faible puissance.

Les barres de liaison comprennent fréquemment des montants parallèles à une droite passant par les deuxième et sixième points, qui s'étendent chacun entre une articulation de la chaîne de barres du système principal et une articulation de la chaîne de barres du système additionnel et sont articulés aux chaînes de barres à ces articulations. Il est alors fréquent qu'un montant aboutisse au quatrième point.

Une autre conception simple est celle où les deux systèmes sont identiques.

L'invention est également relative à un véhicule comprenant un corps central et des pattes reposant sur le sol, muni également de transmissions définies comme précédemment qui unissent chacune le corps central à une patte respective. Le corps central et la patte équivalent au solide et à l'organe ou vice-versa. Les transmissions sont disposées de sorte que les deuxièmes points sont déplacés parallèlement au sol. Par ailleurs, les pattes peuvent être soulevées du sol par des moyens élévateurs.

On va maintenant décrire l'invention à l'aide des figures suivantes données à titre illustratif et non limitatif :
- les figures 1 à 3 représentent trois réalisations d'un système articulé pour convertir un mouvement circulaire en mouvement alternatif ;
- les figures 4 à 7 représentent quatre réalisations complètes de transmission ;
- la figure 8 représente une configuration de véhicule équipé de telles transmissions ;
- la figure 9 représente un agencement pour entraîner une transmission ; et
- la figure 10 représente une autre configuration de véhicule équipé de transmissions.

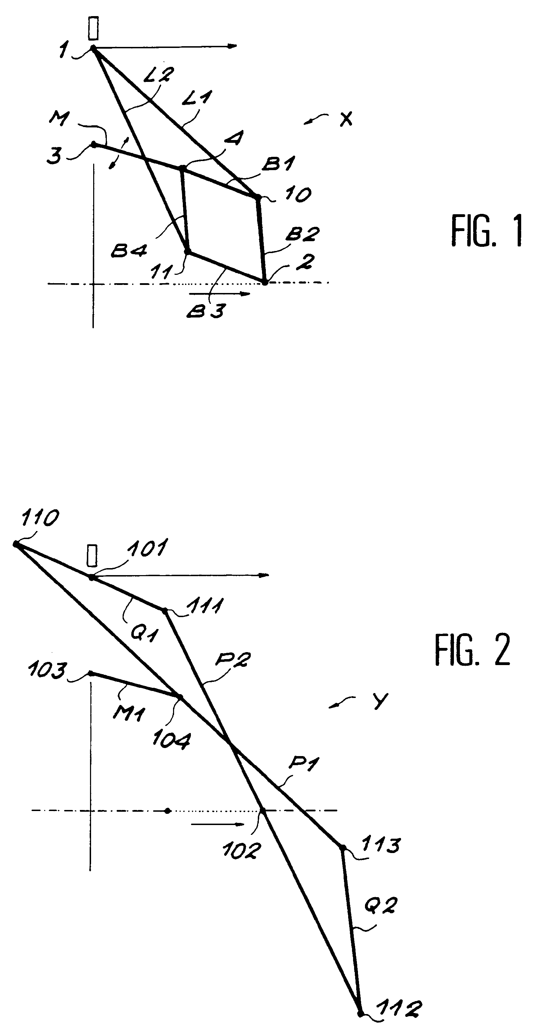

La figure 1 représente un système de barres articulées référencé généralement par X et imaginé par le général Peaucellier au siècle dernier. On retrouve ce système dans le véhicule sujet du brevet FR-A-816 702 qui correspond au préambule de la première revendication. Quatre points du système sont référencés 1 à 4. Quatre barres B1 à B4 de longueur égale sont articulées entre elles de manière à constituer un losange déformable dont les points 2 et 4 sont des sommets opposés, les autres sommets du losange portant les références 10 et 11. Le système comprend en outre deux barres L1 et L2 de même longueur et plus longues que les barres B1 à B4 du losange, dont la première relie le point 1 au point 10 et la seconde le point 1 au point 11. Enfin, une barre M appelée manivelle relie les points 3 et 4.

Toutes les barres sont articulées à leurs extrémités et situées approximativement dans un plan, c'est-à-dire qu'elles ne sont normalement décalées entre elles perpendiculairement à ce plan que de la distance leur permettant de ne pas se rencontrer. Les points 1 à 4 et 10 et 11 correspondent physiquement à des axes de faible longueur. Par ailleurs, la manivelle M a une longueur égale à la distance entre les points 1 et 3.

On vérifiera qu'en maintenant les points 1 et 3 immobiles et en communiquant à la manivelle M un mouvement de rotation autour du point 3 qui déplace le point 4 sur un cercle passant par le point 1, le point 2 est déplacé suivant une droite perpendiculaire à la droite reliant les points 1 et 3 et dont l'éloignement de ces points dépend des longueurs des barres. En langage mathématique, le système X effectue une inversion entre les trajectoires décrites par les points 4 et 2 par rapport au pôle constitué par le point 1.

Un système analogue a été conçu par Hart un peu après le précédent. Ce système est référencé par Y sur la figure 2 et on appelle 101 à 104 quatre points du système aux propriétés équivalentes à celles des points 1 à 4 du système précédent X. On retrouve une manivelle M1 articulée entre les points 103 et 104 et dont la longueur est égale à la distance entre les points 101 et 103. Il existe quatre barres articulées entre elles en quatre points 110 à 113 de manière à former un contre-parallélogramme, c'est-à-dire que les quatre points 110 à 113 correspondent aux sommets d'un parallélogramme, mais deux côtés du contre-parallélogramme correspondent aux diagonales du parallélogramme qui passeraient par ces points. On référence par P1 (articulée entre les points 110 et 113) et P2 (articulée entre 111 et 112) les barres de même longueur qui coïncident avec ces deux côtés, alors que les deux autres côtés du contre-parallélogramme correspondent physiquement à des barres référencées Q1 (articulée entre 110 et 111) et Q2 (articulée entre 112 et 113), les barres Q1 et Q2 étant également de même longueur.

Les points 101, 102 et 104 sont au centre des barres Q1, P2 et P1 respectivement. Si l'on communique à la manivelle M1 une rotation autour du point 103, le point 104 est déplacé suivant un cercle et le point 102 suivant une droite perpendiculaire à la ligne passant entre les points 101 et 103.

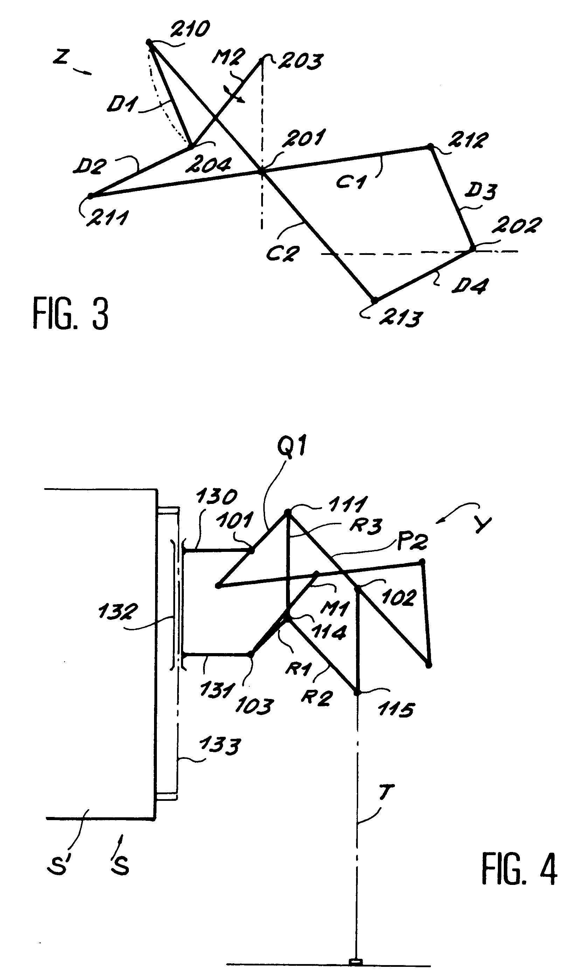

Le système de Hart est plus simple que celui de Peaucellier car il utilise moins de barres, mais il est plus encombrant car les barres sont plus longues pour des courses identiques du point déplacé sur une droite. L'inventeur a proposé un troisième système Z (figure 3) où l'on peut définir quatre points 201 à 204 aux propriétés identiques à celles des points 1 à 4 respectivement, ainsi que quatre points supplémentaires 210 à 213. Le système se compose, en plus d'une manivelle M2 articulée entre les points 203 et 204 et de longueur égale à la distance entre les points 201 et 203, de deux barres croisées C1 et C2 de même longueur et articulées entre elles en leur centre (qui correspond au point 201), et de quatre barres D1 à D4 toutes de même longueur et disposées en deux paries. Les barres D1 à D4 sont articulées respectivement entre les points 210 et 204, 204 et 211, 212 et 202 et 202 et 213. De plus, la barre C1 s'étend entre les points 211 et 212 et la barre C2 entre les points 210 et 213. Par ailleurs, les barres D1 et D3 sont parallèles entre elles de même que les barres D2 et D4.

Un mouvement circulaire du point 204 autour du point 203 correspond à un mouvement de va-et-vient suivant une droite du point 202.

La figure 4 représente un exemple d'adaptation de tels systèmes à une transmission entre un solide tel qu'un corps central S d'un véhicule robotisé et un organe constituant une patte T d'appui au sol. Le point 102 du système de Hart Y est articulé à la patte T et le point 101, de même que le point 103, au corps central S. Il est toutefois nécessaire de prévoir un système supplémentaire pour empêcher le renversement de la patte T. C'est pourquoi deux barres supplémentaires R1 et R2 sont articulées entre elles en un point 114 et, respectivement, au point 103 et en un point 115 de la patte T. Les barres R1 et R2 constituent une chaîne parallèle à une autre chaîne de barres appartenant au système de Hart Y, à savoir la barre Q1 entre les points 101 et 111 et la barre P2 entre les points 111 et 102. Par ailleurs, une troisième barre supplémentaire R3 est articulée entre les points 111 et 114.

Le système résultant a donc toujours un degré de liberté ; quand la manivelle M1 est tournée, les points 102 et 115 se déplacent suivant des translations horizontales de même ampleur. La patte T ne subit donc aucune rotation.

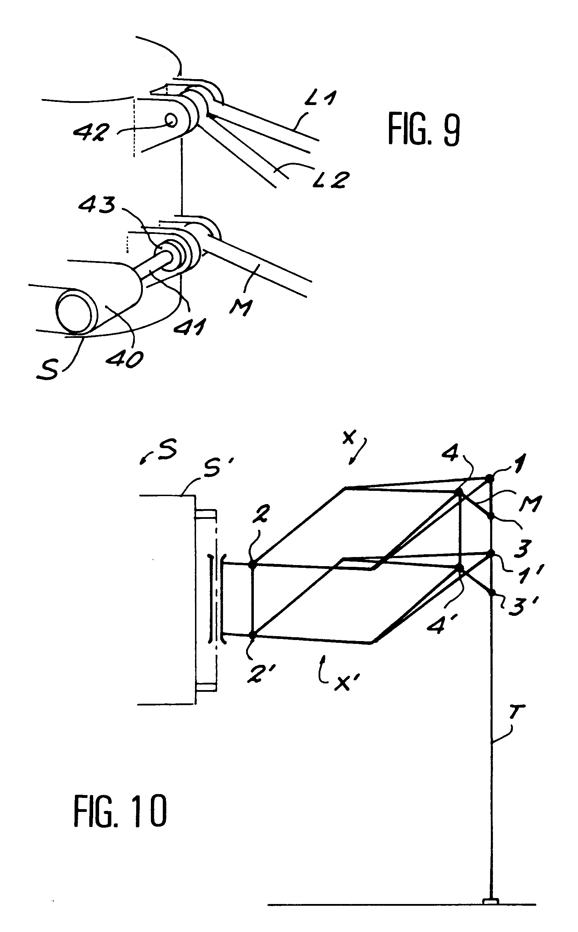

Le mouvement de la manivelle M1 peut être provoqué par un moteur électrique non représenté dont l'arbre coïncide avec le point d'articulation 103 et s'étend perpendiculairement au plan des barres de la transmission. Un tel moteur peut, comme on l'a indiqué plus haut, avoir une faible puissance car le poids du corps central S ne se traduit pas par une composante de couple autour du point 103. La figure 9 représente cette disposition pour le système de la figure 1. Le moteur 40 d'entraînement de la transmission est fixé au solide S. Son arbre tournant 41 est d'une pièce avec la manivelle M. Les barres L1 et L2 sont articulées sur un axe immobile 42, porté par le solide S, par l'intermédiaire de paliers non représentés. L'arbre tournant 41 est soutenu par un palier 43 logé dans un évidement du solide S.

Les points 101 et 103 sont situés aux extrémités de deux longerons horizontaux 130 et 131 dont les autres extrémités sont fixées à un palier 132 mobile le long d'une glissière verticale 133 fixée à un noyau S' qui constitue l'essentiel du corps central S. Des systèmes tels qu'un vérin ou un moteur pas à pas engrenant avec une crémaillère peuvent soulever la patte T en faisant glisser le palier 132 verticalement ou orienter la patte T par rapport au noyau S' en faisant tourner le palier 132.

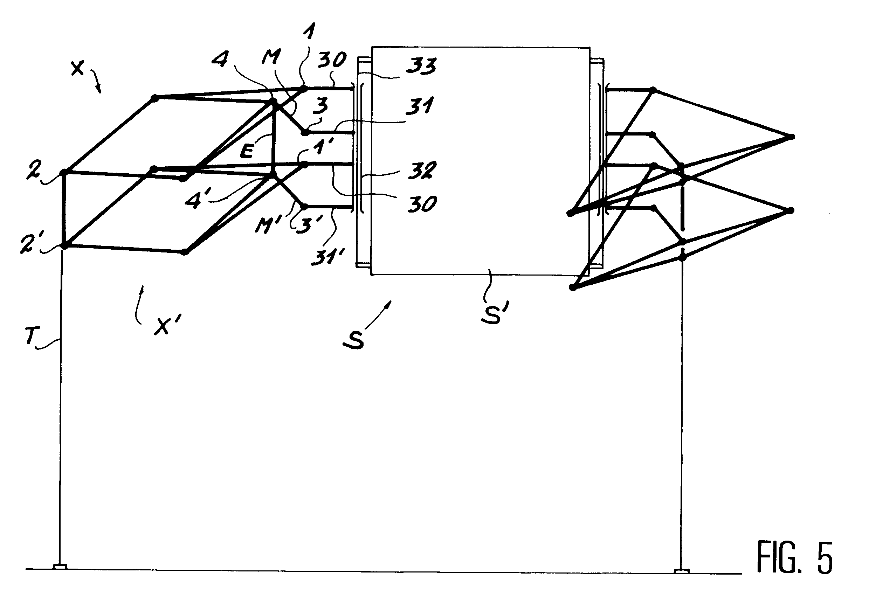

On voit sur la figure 5 qu'une autre solution satisfaisante consiste à superposer deux systèmes inverseurs, dans le cas présente deux systèmes de Peaucellier, référencés X et X', identiques et qui seraient superposables par une simple translation verticale. La patte T est articulée aux systèmes X et X' en deux points 2 et 2', le corps central S en quatre points 1, 3, 1' et 3'. Une seule des manivelles, ici celle M' qui appartient au système inférieur X', est motrice. Il est donc nécessaire de prévoir une barre de synchronisation E entre les deux systèmes X et X', qui est par exemple articulée aux deux points 4 et 4' d'extrémité des manivelles M et M' mais qui peut aussi être articulée à deux points d'emplacement semblable appartenant chacun à un système X ou X'. La distance entre les deux systèmes X et X' peut être arbitraire, mais il est éventuellement possible de la choisir de sorte que les points 3 et 1' soient confondus, ce qui simplifie la transmission.

Les points 1, 3, 1' et 3' sont reliés par quatre longerons parallèles 30, 31, 30' et 31' à un palier 32 coulissant dans les mêmes conditions que pour la figure 4 dans une glissière verticale 33 reliée rigidement au corps S.

La partie gauche de la figure 5 représente la transmission étendue au maximum, et la partie droite la même transmission dans l'état où elle est le plus ramassée.

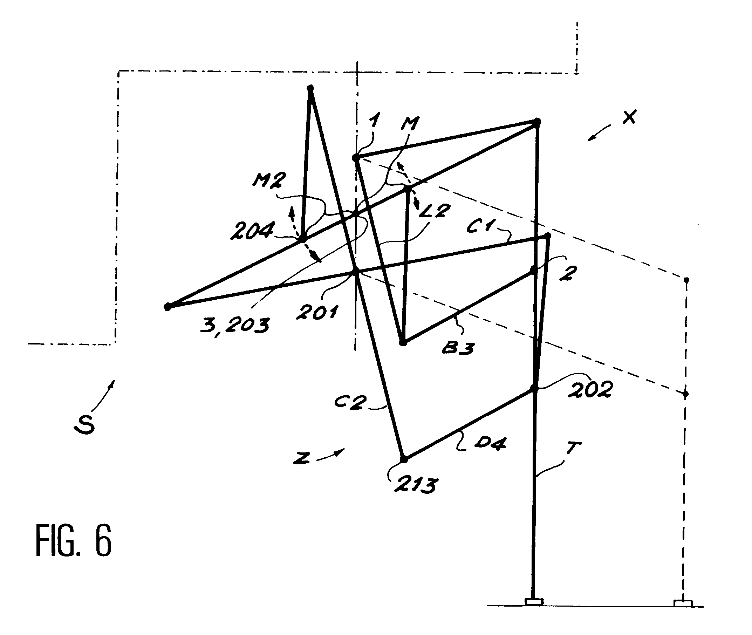

La figure 6 représente un cas de combinaison plus compliquée, car on a superposé pour constituer la transmission un système de Peaucellier X et un troisième système 2. La patte T est articulée aux points 2 et 202 et le corps central S aux points 1, 3, 201 et 203. Toutefois, les points 3 et 203 sont confondus dans cette réalisation et les manivelles M et M2 constituent en fait deux parties opposées par rapport au point d'articulation 3 ou 203 d'une même manivelle rectiligne. La seule liaison entre les deux systèmes X et Z réside donc dans cette manivelle commune, et il n'y a pas de barres supplémentaires de liaison. Une condition géométrique à remplir est que les barres B3 et L2 du système Peaucellier X soient respectivement de même longueur que la barre D4 et la partie de la barre C2 comprise entre les points 201 et 213 du troisième système Z.

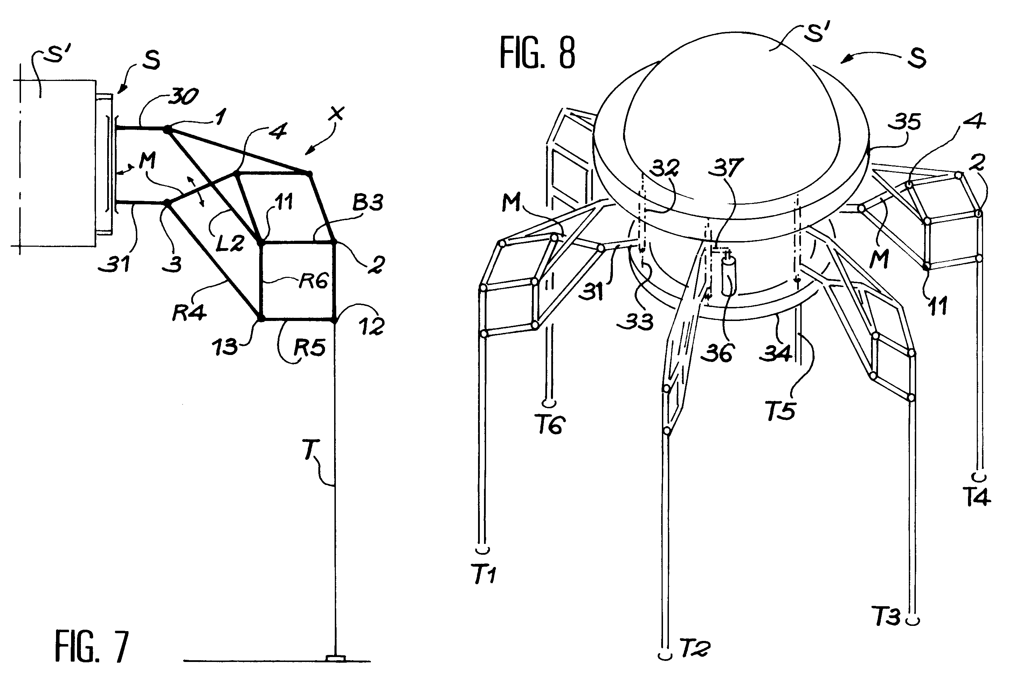

La figure 7 illustre une variante appréciée car elle présente un nombre réduit de barres et permet donc une simplification sans modifier l'importance de la course de la patte T. Cette transmission est constituée d'un système de Peaucellier X et de trois barres supplémentaires R4, R5 et R6 articulées respectivement en des points 3 et 13, 13 et 12 et 13 et 11. Le point 12 est articulé à la patte T. Les barres R4, R5 et R6 ont des longueurs égales respectivement à celles de la barre L2, de la barre B3 et à la distance entre les articulations 2 et 12. Il en résulte que les barres R4 et R5 sont respectivement parallèles aux barres L2 et B3.

Des transmissions de ce type relient chacune des pattes T1 à T6 d'un robot hexapode représenté figure 8 à un corps central S unique permettant une extension relative de ces pattes par rapport à ce corps. Pour chaque patte T1 à T6, la glissière 33 du palier 32 est encastrée à ses extrémités dans deux plate-formes horizontales et annulaires 34 et 35 du corps central S. Le cylindre d'un vérin 36 est fixé à la plate-forme inférieure 34 et sa tige est reliée rigidement au palier 32 par une console 37. Les mouvements verticaux de la tige du vérin 36 soulèvent et abaissent la patte correspondante. Des rotations du palier 32 autorisent un pivotement du plan de la patte autour de l'axe de ce palier. Le mouvement du robot s'effectue en soulevant alternativement deux groupes de trois pattes, par exemple T1, T2 et T5 d'une part, T3, T4 et T6 d'autre part. Ainsi, pour se déplacer en direction de la patte T5, on soulève les pattes T3, T4 et T6, après quoi la transmission reliée à la patte T5 est contractée et celles qui sont reliées aux pattes T1 et T2 sont étendues ; on commande simultanément les rotations : le corps central S est donc déplacé. On abaisse ensuite les pattes T3, T4 et T6 puis on soulève les pattes T1, T2 et T5 dont les transmissions subissent des mouvements inverses aux précédents.

Par ailleurs, les rotations des manivelles peuvent être en sens alternés ou suivant un mouvement continu selon la nature de la transmission.

Il est immédiat, à la lecture de la description qui précède, que d'autres réalisations sont possibles sans sortir du cadre de l'invention. C'est ainsi que les positions de la patte T et du corps central S peuvent être inversées, comme le représente la figure 10. La transmission est formée de deux systèmes de Peaucellier X et X', comme dans la figure 5. Les points 1, 1', 3 et 3' sont fixés sur la patte T, les points 2 et 2' sur le corps central S. Le moteur d'entraînement non représenté qui entraîne la manivelle M est placé sur la patte T. L'avantage de cette interversion est que les barres articulées dépassent très peu vers l'extérieur de la patte T quand celle-ci est rapprochée du corps central S ; l'encombrement du véhicule est donc réduit. Pour certaines proportions des longueurs des barres, il est même possible qu'elles ne dépassent pas du tout.

## Revendications

1. Dispositif de déplacement relatif entre un solide (S) et un organe (T), composé d'un système principal (X, Y, Z) de barres articulées entre elles et comprenant un premier point (1, 101, 201) articulé au solide (S), un deuxième point (2, 102, 202) articulé à l'organe (T), une manivelle (M, M1, M2) faisant partie des barres, articulée au solide (S) en un troisième point (3, 103, 203) et à d'autres barres en un quatrième point (4, 104, 204), cette manivelle ayant une longueur égale à la distance entre le premier et le troisième points, de sorte qu'un mouvement de rotation de la manivelle autour du troisième point se traduit par un mouvement rectiligne du deuxième point ; d'un système additionnel de barres articulées au solide (S) en un cinquième point (103, 1', 3', 203, 3) et à l'organe en un sixième point (115, 2', 202, 12), le système additionnel étant constitué de manière à présenter une chaîne de barres (R1, R2, C2, D4 ; R4, R5) entre le sixième et le cinquième points identique, à une translation près, à une chaîne de barres du système principal entre le deuxième point et un septième point où le système principal est articulé au solide ; de barres de liaison (R3, E, M, M2, R6) entre les deux systèmes, disposées de manière que l'ensemble des deux systèmes ait un degré de liberté et que les deux chaînes de barres se déforment identiquement ; et d'un système moteur apte à faire tourner la manivelle autour du troisième point, caractérisé en ce que le système moteur comprend un arbre moteur (41) perpendiculaire au plan du système des barres, ledit arbre (41) tournant autour du troisième point (3,103,203) et la manivelle (M, M₁,M₂) étant fixée audit arbre (41).

2. Dispositif de déplacement suivant la revendication 1, caractérisé en ce que le septième point est confondu avec le premier point.

3. Dispositif de déplacement suivant la revendication 1, caractérisé en ce que le septième point est confondu avec le troisième point.

4. Dispositif de déplacement suivant la revendication 2, caractérisé en ce que le cinquième point est confondu avec le troisième point.

5. Dispositif de déplacement suivant l'une quelconque des revendications 1 à 4, caractérisé en ce que les barres de liaison comprennent des montants parallèles à une droite passant par le deuxième et le sixième points, s'étendent chacun entre une articulation de la chaîne de barres du système principal et une articulation de la chaîne de barres du système additionnel, et sont articulés aux chaînes de barres à ces articulations.

6. Dispositif de déplacement suivant la revendication 5, caractérisé en que qu'un montant (E) aboutit au quatrième point.

7. Dispositif de déplacement suivant l'une quelconque des revendications 1 à 6, caractérisé en ce que les deux systèmes sont identiques (X, X').

8. Dispositif de déplacement suivant l'une quelconque des revendications 1 à 7, caractérisé en ce que le système principal se compose, outre la manivelle, de quatre barres articulées en losange (B1 à B4), le deuxième et le quatrième points correspondant à des sommets opposés du losange, et de deux barres de longueur égale (L1, L2), articulées chacune au premier point et, respectivement, aux deux autres sommets du losange.

9. Dispositif de déplacement suivant les revendications 2, 6 et 8, caractérisé en ce que la chaîne de barres du système principal se compose d'une barre (L2) articulée au premier point et d'une barre (B3) du losange articulée au deuxième point et à la barre précédente, un montant (E) aboutissant au quatrième point et les premier et septième points étant confondus.

10. Dispositif de déplacement suivant l'une des revendications 1 à 7, caractérisé en ce que le système principal se compose, outre la manivelle, de quatre barres articulées en contre-parallélogramme (P1, P2, Q1, Q2), le premier point étant au centre d'un des côtés du contre-parallélogramme, le deuxième point et le quatrième point étant respectivement aux centres de deux côtés du contre-parallélogramme adjacents au côté portant le premier point.

11. Dispositif de déplacement suivant l'une quelconque des revendications 1 à 7, caractérisé en ce que le système principal se compose, outre la manivelle, de deux barres croisées (C1, C2), de même longueur et articulées en leur centre au premier point, et de deux paires de barres de liaison (D1 à D4), les barres de liaison étant, pour chaque paire, articulées chacune à une barre croisée différente et articulées entre elles au deuxième point pour une paire et au quatrième point pour l'autre paire, chaque barre d'une paire étant parallèle à une barre de l'autre paire.

12. Dispositif de déplacement suivant la revendication 8, caractérisé en ce que le système additionnel se compose de deux barres croisées (C1, C2), de même longueur et articulées en leur centre au cinquième point (201), et de deux paires de barres de liaision, les barres de liaison de chaque paire étant articulées chacune à une barre croisée différente et entre elles, au sixième point (202) pour une paire et à un huitième point (204) pour l'autre paire, une barre de liaison (M2) prolongeant par ailleurs la manivelle entre le troisième et le huitième points.

13. Véhicule comprenant un corps central (S) et des pattes (T1 à T6) portant le corps et reposant sur le sol, caractérisé en ce qu'il comporte en outre des dispositifs de déplacement définis suivant l'une quelconque des revendications précédentes qui unissent chacune le corps central à une patte respective, le corps central correspondant au solide et la patte à l'organe, les dispositifs de déplacement étant disposés de sorte que les deuxièmes points sont déplacés parallèlement au sol, et en ce que les pattes peuvent être soulevées du sol par des moyens élévateurs (36).

14. Véhicule comprenant un corps central (S) et des pattes (T1 à T6) portant le corps et reposant sur le sol, caractérisé en ce qu'il comporte en outre des dispositifs de déplacement définis suivant l'une quelconque des revendications précédentes qui unissent chacune le corps central à une patte respective, le corps central correspondant à l'organe et la patte au solide, les dispositifs de déplacement étant disposés de sorte que les deuxièmes points sont déplacés parallèlement au sol, et en ce que les pattes peuvent être soulevées du sol par des moyens élévateurs (36).

## Patentansprüche

1. Vorrichtung zur relativen Fortbewegung zwischen einem Festkörper (S) und einem Organ (T), zusammengesetzt aus einem Hauptsystem (X, Y, Z) untereinander gelenkiger Stäbe, umfassend einen ersten Gelenkpunkt (1, 101, 201) am festen Körper (S), einen zweiten Gelenkpunkt (2, 102, 202) am Organ (T), eine Kurbel (M, M1, M2), die Teil der Stäbe ist, gelenkig gelagert am Festkörper (S) in einem dritten Punkt (3, 103, 203) und an andere Stäbe in einem vierten Punkt (4, 104, 204), wobei diese Kurbel eine Länge aufweist, die gleich dem Abstand zwischen dem ersten Punkt und dem dritten Punkt ist, so daß eine Drehbewegung der Kurbel um den dritten Punkt sich überträgt in eine geradlinige Bewegung des zweiten Punkts; einem Zusatzsystem gelenkig am Festkörper (S) gelagerter Stäbe in einem fünften Punkt (103, 1', 3', 202, 3) und an dem Organ in einem sechsten Punkt (115, 2', 202, 12), wobei das Zusatzsystem so gebildet ist, daß es eine Stäbekette darstellt (R1, R2, C2, D4; R4, R5) zwischen dem sechsten und dem fünften Punkt, identisch bis auf eine Translation, mit einer Stäbekette des Hauptsystems zwischen dem zweiten Punkt und einem siebten Punkt, wo das Hauptsystem am Festkörper gelenkig gelagert ist; Verbindungsstäben (R3, E, M, M2, R6) zwischen den beiden Systemen, so angeordnet, daß der Aufbau der beiden Systeme einen Freiheitsgrad aufweist und die beiden Stäbeketten sich identisch verformen; einem Antriebssystem, fähig, die Kurbel um den dritten Punkt in Drehung zu versetzen,
dadurch **gekennzeichnet,**
daß das Antriebssystem eine Antriebswelle (41) umfaßt, senkrecht zur Ebene des Stäbesystems, wobei die genannte Welle (41) um einen dritten Punkt (3, 103, 203) dreht und die Kurbel (M, M1, M2) mit der genannten Welle (41) verbunden ist.

2. Fortbewegungsvorrichtung nach Anspruch 1, dadurch gekennzeichnet, daß der siebte Punkt zusammenfällt mit dem ersten Punkt.

3. Fortbewegungsvorrichtung nach Anspruch 1, dadurch gekennzeichnet, daß der siebte Punkt zusammenfällt mit dem dritten Punkt.

4. Fortbewegungsvorrichtung nach Anspruch 2, dadurch gekennzeichnet, daß der fünfte Punkt zusammenfällt mit dem dritten Punkt.

5. Fortbewegungsvorrichtung nach einem beliebigen der Ansprüche 1 bis 4, dadurch gekennzeichnet, daß die Verbindungsstäbe Vertikalstäbe umfassen, parallel zu einer Geraden, den zweiten und den sechsten Punkt durchlaufend, wobei jeder sich erstreckt zwischen einem Gelenk der Stäbekette des Hauptsystems und einem Gelenk der Stäbekette des Zusatzsystems, und sie gelenkig gelagert sind an den Stäbeketten, an diesen Gelenken.

6. Fortbewegungsvorrichtung nach Anspruch 5, dadurch gekennzeichnet, daß ein Vertikalstab (E) am vierten Punkt endet.

7. Fortbewegungsvorrichtung nach einem beliebigen der Ansprüche 1 bis 6, dadurch gekennzeichnet, daß die beiden Systeme identisch sind (X, X').

8. Fortbewegungsvorrichtung nach einem beliebigen der Ansprüche 1 bis 7, dadurch gekennzeichnet, daß das Hauptsystem sich zusammensetzt, außer der Kurbel, aus vier einen Rhombus bildenden Gelenkstäben (B1 bis B4), wobei der zweite und der vierte Punkt entgegengesetzten Spitzen des Rhombus entsprechen, und aus zwei Stäben gleicher Länge (L1, L2), jeder am ersten Punkt gelenkig gelagert und jeweils an den beiden anderen Spitzen des Rhombus.

9. Fortbewegungsvorrichtung nach den Ansprüchen 2, 6 und 8, dadurch gekennzeichnet, daß die Stäbekette des Hauptsystems sich zusammensetzt aus einem Stab (L2), gelenkig gelagert am ersten Punkt, und einem Stab (B3) des Rhombus, gelenkig gelagert am zweiten Punkt und am vorhergehenden Stab, einem Vertikalstab E, endend am vierten Punkt, wobei der erste und der siebte Punkt zusammenfallen.

10. Fortbewegungsvorrichtung nach einem der Ansprüche 1 bis 7, dadurch gekennzeichnet, daß das Hauptsystem sich zusammensetzt, außer der Kurbel, aus vier, ein Gegenparallelogramm bildenden Gelenkstäben (P1, P2, Q1, Q2), wobei sich der erste Punkt im Zentrum einer der Seiten des Gegenparallelogramms befindet und der zweite und der vierte Punkt jeweils in der Mitte der beiden Seiten des Gegenparallelogramms, die an die Seiten angrenzen, die die ersten Punkte enthalten.

11. Fortbewegungsvorrichtung nach einem beliebigen der Ansprüche 1 bis 7, dadurch gekennzeichnet, daß das Hauptsystem sich zusammensetzt, außer der Kurbel, aus zwei gekreuzten Stäben (C1, C2), gleich lang und in ihrer Mitte am ersten Punkt gelenkig gelagert, und aus zwei Paar Verbindungsstäben (D1 bis D4), wobei die Verbindungsstäbe, für jedes Paar, jeder an einer anderen gekreuzten Stange gelenkig gelagert ist und untereinander gelenkig gelagert sind am zweiten Punkt für ein Paar und am vierten Punkt für das andere Paar, wobei jeder Stab eines Paars parallel ist zu einem Stab des anderen Paars.

12. Fortbewegungsvorrichtung nach Anspruch 8, dadurch gekennzeichnet, daß das Zusatzsystem sich zusammensetzt aus zwei gekreuzten Stäben (C1, C2), gleich lang und in ihrer Mitte am fünften Punkt (201) gelenkig gelagert, und aus zwei Paar Verbindungsstäben, wobei die Verbindungsstäbe jedes Paars gelenkig verbunden sind, jeder mit einem anderen gekreuzten Stab und untereinander im sechsten Punkt (202) für ein Paar und im achten Punkt (204) für das andere Paar, wobei ein Verbindungsstab (M2) außerdem die Kurbel verlängert zwischen dem dritten und dem achten Punkt.

13. Fahrzeug, enthaltend einen Zentralkörper (S) und Beine (T1 bis T6), den Körper tragend und auf der Erde stehend, dadurch gekennzeichnet, daß es außerdem Fortbewegungsvorrichtungen umfaßt, definiert gemäß einem beliebigen der vorhergehenden Ansprüche, wovon jede den Zentralkörper mit einem jeweiligen Bein vereinigt, wobei der Zentralkörper dem Festkörper entspricht und das Bein dem Organ, wobei die Fortbewegungsvorrichtungen so angeordnet sind, daß die zweiten Punkte parallel zum Boden fortbewegt werden und dadurch, daß die Beine vom Boden abgehoben werden können durch Hebeeinrichtungen (36).

14. Fahrzeug, enthaltend einen Zentralkörper (S) und Beine (T1 bis T6), den Körper tragend und auf der Erde stehend, dadurch gekennzeichnet, daß es außerdem Fortbewegungsvorrichtungen umfaßt, definiert gemäß einem beliebigen der vorhergehenden Ansprüche, wovon jede den Zentralkörper mit einem jeweiligen Bein vereinigt, wobei der Zentralkörper dem Organ entspricht und das Bein dem Festkörper, wobei die Fortbewegungsvorrichtungen so angeordnet sind, daß die zweiten Punkte parallel zum Boden fortbewegt werden und dadurch, daß die Beine vom Boden abgehoben werden können durch Hebeeinrichtungen (36).

## Claims

1. Device for the relative movement between a solid (S) and a member (T) and composed of a main system (X, Y, Z) of bars joined together and including a first point (1, 101, 201) joined to the solid (S), a second point (2, 102, 202) joined to the member (T), a crank (M, M1, M2) forming part of the bars and joined to the solid (S) at a third point (3, 103, 203) and to other bars at a fourth point (4, 104, 204), this crank having a length equal to the distance between the first and the third points so that a movement rotating the crank around the third point is expressed by a rectilinear movement of the second point; an additional system of bars joined to the solid (S) at a fifth point (103, 1', 3', 203, 3) and to the member at a sixth point (115, 2', 202, 12), the additional system being constituted in such a way as to have a chain of bars (R1, R2, C2, D4; R4, R5) between the sixth and the fifth points identical at a nearby transmission to a chain of bars of the main system between the second point and a seventh point where the main system is joined to the solid; linking bars (R3, E, M, M2, R6) between the two systems disposed in such a way that both the systems have a degree of freedom and that the two chains of bars deform identically; and a motor system adapted to cause the crank to rotate around the third point, characterized in that the motor system comprises a motor shaft (41) perpendicular to the plane of the system of bars, said shaft (41) rotating about the third point (3, 103, 203) and the crank (M, M1, M2) being fixed to said shaft (41).

2. Displacement device according to claim 1, characterized in that the seventh point is merged with the first point.

3. Displacement device according to claim 1, characterized in that the seventh point is merged with the third point.

4. Displacement device according to claim 2, characterized in that the fifth point is merged with the third point.

5. Displacement device according to any one of the claims 1 to 4, characterized in that the linking bars include stanchions parallel to a straight line passing through the second and sixth points each extending between one joint of the bar chain of the main system and one joint of the bar chain of the additional system and are joined to the bar chains with these joints.

6. Displacement device according to claim 5, characterized in that a stanchion ends at the fourth point.

7. Displacement device according to any one of the claims 1 to 6, characterized in that the two systems are identical (X, X').

8. Displacement device according to any one of the claims 1 to 7, characterized in that the main system is composed, apart from the crank, of four rhombus-articulated bars (B1 to B4), the second and fourth points corresponding to opposing apexes of the rhombus, and two bars of equal length (L1, L2) each joined to the first point and respectively to the other two apexes of the rhombus.

9. Displacement device according to any one of the claims 2, 6 and 8, characterized in that the bar chain of the main system is composed of one bar (12) joined to the first point and one bar (B3) of the rhombus joined to the second point and to the preceding bar, a stanchion (E) ending at the fourth point and with the first and seventh points being merged.

10. Displacement device according to any one of the claims 1 to 7, characterized in that the main system is composed, apart from the crank, of four bars to form a counter-parallelogram (P1, P2, Q1, Q2), the first point being at the center of one of the sides of the counterparallelogram, the second and fourth points respectively being at the centers of two sides of the counterparallelogram, these two sides being adjacent to the side bearing the first point.

11. Displacement device according to any one of the claims 1 to 7, characterized in that the main system is composed, apart from the crank, of two crossed bars (C1, C2) of the same length and joined at their center to the first point, and two pairs of linking bars (D1 to D4), the linking bars for each pair each being joined to a different crossed bar and joined together to the second point for one pair and to the fourth point for the other pair, each bar of one pair being parallel to one bar of the other pair.

12. Displacement device according to claim 8, characterized in that the additional system is composed of two crossed bars (C1, C2) of the same length and joined at their center to the fifth point (201), and two pairs of linking bars, the linking bars of each pair each being joined to each other and to a different crossed bar, to the sixth point (202) for one pair and to an eighth point (204) for the other pair, one linking bar (M2) also prolonging the crank between the third and the eighth points.

13. Vehicle including a central body (S) and legs (T1 to T6) bearing the body and resting on the ground, characterized in that it further comprises displacement devices defined according to any one of the preceding claims and which each connect the central body to a respective leg, the central body corresponding to the solid and the leg to the member, the displacement devices being disposed in such a way that the second points are moved parallel to the ground, and wherein the legs are able to be lifted from the ground by elevating means (36).

14. Vehicle including a central body (S) and legs (T1 to T6) bearing the body and resting on the ground, characterized in that it further comprises displacement devices defined according to any one of the preceding claims and which each connect the central body to a respective leg, the central body corresponding to the member and the leg to the solid, the displacement devices being disposed in such a way that the second points are moved parallel to the ground and wherein the legs may be lifted from the ground by elevating means (36).
